# EUROPEAN PATENT SPECIFICATION

(11) **EP 1 031 254 B1**
(45) Date of publication and mention of the grant of the patent: **19.05.2004**
(21) Application number: 98952910.2
(22) Date of filing: 11.11.1998
(51) Int. Cl.: H04Q 11/04, H04L 7/04

(54) **BIT STREAM SYNCHRONIZATION**
SYNCHRONISIERUNG EINES BITSTROMES
SYNCHRONISATION DE TRAINS DE BITS

(30) Priority: 13.11.1997 GB 9724026
(43) Date of publication of application: 30.08.2000
(73) Proprietor: GlobespanVirata Limited, Cambridge Cambridgeshire CB4 0WB (GB)
(72) Inventor: LOO, Gert, Van, NL-6412 HV Heerlen (NL)
(74) Representative: Cozens, Paul Dennis
(86) International application number: PCT/GB1998/003376
(87) International publication number: WO 1999/026448

(56) References cited:
- EP-A- 0 503 667
- US-A- 5 579 324
- DODDS D E ET AL: "ATM FRAMING USING CRC BYTE" SERVING HUMANITY THROUGH COMMUNICATIONS. SUPERCOMM/ICC, NEW ORLEANS, MAY 1 - 5, 1994, vol. 1, 1 May 1994, pages 410-414, XP000438949 INSTITUTE OF ELECTRICAL AND ELECTRONICS ENGINEERS

## Description

The present invention relates to bit stream synchronization, and in a preferred embodiment to the identification of cell boundaries in an ATM bit stream.

Data transmission by means of a serial bit stream is commonplace. Serial bit streams are not normally accompanied by any synchronizing information, and it is therefore necessary for the receiving unit to identify the various boundaries in the bit stream.

At the lowest level, identification of the bit boundaries may be required. This is relatively straightforward. Beyond this, however, identification of byte, word, and/or cell boundaries will also usually be required.

A specific example is in ATM (Asynchronous Transfer Mode) systems. In ATM, data is transmitted as cells. An ATM cell consists of 53 bytes, of which the first 5 bytes constitute a routing and control header and the remaining 48 bytes constitute the body. In the header, the 5th byte is a so-called HEC (Header error Control) check byte, which in fact consists of a 1 byte check value calculated from the first 4 bytes. The contents of the 48 bytes of the body are unconstrained.

With a continuous stream of ATM cells, therefore, it is necessary to identify the cell boundaries. Once that has been achieved, the interior structure of the cells (division between header and body, and division into bytes) can be readily achieved.

Cell boundary identification is conventionally performed by monitoring the bit stream for a 40-bit (5 byte) sequence which has the header structure, ie in which the value in the 5th byte matches the HEC value calculated for the preceding 4 bytes.

It is, however, possible for such a structure to occur by chance in the bit stream, as will be explained. The 8-bit HEC has one of 256 possible values. Thus, for a random pattern of 40 bits, there is a one in 256 chance that the HEC calculated for the first 32 bits will match the value contained in the next 8 bits. This is, of course, relatively low. However, each cell contains 53 bytes (424 bits), so the chance of a false match occurring within an entire cell (which provides 424 possible match points) is relatively high; simplistically the chance of finding no false match is (255/256)⁴²⁴, which is only about 20% or in other words there is an 80% chance of at least one false match at some point in the cell. (In fact, the above is a simplification; due to the nature of the algorithm, the probability of finding adjacent false matches is less than if the likelihood of a false match were 1/256 in each case. Also, the simplification does not take into account the possibility of bit errors occurring in transmission).

Thus, the detection of a 40-bit sequence with the header structure is therefore regarded as indicating only a provisional or potential cell header. A true cell header will be followed by further cell headers at intervals of 53 bytes, ie 424 bits. So to improve the reliability of the check whether a potential cell header is a true cell header, the bit stream is inspected at intervals of 424 bits to determine whether the 40-bit sequence at each interval also has the cell header structure. The likelihood of two false matches at exactly 424 bit intervals is much lower than that of a single false match. (If desired, further inspections of the bit stream at further intervals of 424 bits can be made, to decrease the probability of false coincidences to any desired degree.) If the 40-bit sequence following the first interval does not have the correct header structure, then it can be assumed that the original potential cell header was not a true cell header, and the bit stream must be monitored for a further potential cell header.

Once two (or the desired number) of sequential matches have been detected, synchronisation with the bitstream can be established, and known processing techniques can be applied to the bitstream.

Detection of the start of an ATM cell by verifying HEC values for two sequential cells is a known problem, and has been solved in the prior art. However, prior art methods have generally required large arrays of logic gates which are capable of processing widely separated regions of the bit stream simultaneously. US―A― 5570368 discloses a cell multiplexer wherein time division multiplex data is stored in a central buffer memory prior to being output as ATM cells through a cell interface. A cell delineation function is required for each input stream so that cell boundaries can be identified. A cell delineation mechanism is disclosed whereby the state of each line is stored in a common memory. WO―A94/00940 discloses a device for ATM cell synchronisation, but it depends entirely on coprimality of a header and payload as a way to reduce the possible number of matches that need to be made in determining cell boundaries. This coprimality allows non―overlapping but "substantially" continuous blocks of cells to be differentiated. The present invention does not rely on coprimality. US―A―5579324 discloses a synchronising circuit for a multiplexer/demultiplexer. The multiplexer divides a bit stream into sequential packets, the boundary between the packets being established by constantly selecting bit positions and values within a predetermined part of each packet, so that a check calculation of this part will give a predetermined value. Control logic for synchronising each incoming bit stream, inserts a time delay in a series―parallel converter and supplies the parallel synchronised bit stream to memory. An outgoing connection receives the parallel synchronised bit stream, through buffers and a parallel―series converter. In the event of the predetermined value, a boundary is established between adjacent packets. For multiplexing, the bit stream is coordinated in packets, a number of incoming connections and one outgoing connection establish a grouped logic link. For demultiplexing, bit streams are coordinated into packets in which one incoming connection and a number of outgoing connections establish a grouped logic link.

One object of the invention is to provide an improved technique for detecting cell boundaries or establishing synchronisation with a bit stream. Although primarily applicable to delineation of ATM cells, the invention may be more generally applied to detect the sequential occurrence of two or more "signatures" at predetermined intervals in a serial bit stream. At least in preferred embodiments of the invention, cell delineation can be performed with considerably few logic gates than was possible with prior art techniques.

Features of the invention are defined by the attached claims.

When a signature match is detected, an indicator of its position is registered in memory and compared to the position of a subsequently detected match. Thus, the portion of the bit stream which originally triggered the match need not be present (although the bit stream may be stored for other purposes) when the second match is detected. Therefore, the apparatus does not need lengthy shift registers to hold large portions of the bit stream while detection is carried out. Whilst the signature match can be detected by comparing the received bit stream with one or more predetermined explicitly set bit patterns, it is preferable if the pattern comprises a relationship between portions of the sequence. Thus the signature verification means is preferably arranged to calculate a signature function (preferably a Header Error Correction or Cyclic Redundancy Check function) from a first part of the sequence and to compare the result with the contents of a second part of the sequence. Although typically the first and second parts will be contiguous, it is possible for them to be separated by portions of bitstream which do not feature in the signature verification process.

It will be appreciated that the absolute value of the positional indicator is unimportant provided that its relationship to a desired portion of the sequence, for example the start of the cell concerned or the next cell, is known or can be determined.

Ideally, the apparatus includes a counter, the value of the counter being incremented as the bitstream passes through the apparatus, the positional indicator being derived from the counter. This provides a convenient means of providing positional indicators.

The counter most preferably has a maximum value at least equal to said predetermined spacing. This enables reliable detection of matches at the desired spacing, without problems of false detection at "alias" positions (although this may be tolerated in certain cases; the probability of false detection will still be significantly lower than in the case of matching only a single signature).

However it is found that the counter maximum value or cycle length need not be exactly equal to the predetermined spacing (if it is equal, this is advantageous, as two matches separated by the predetermined spacing will have equal counter values; in such a case, the determining means need simply compare the present (or later) counter value to the earlier stored counter value). Nor need the counter maximum value be sufficiently large to ensure that all values are unique, without the counter resetting while attempting to establish synchronisation (although this also has advantages; the detecting means need simply detect a difference in later and earlier counter values equal to the spacing). Instead, it has been appreciated that a counter which has a maximum value greater than the spacing but not necessarily related to the spacing may be employed, provided detection of the difference in counter values employs arithmetic modulo the maximum counter value.

Preferably the counter is an n-bit binary counter, where 2ⁿ is greater than or equal to the predetermined spacing, preferably the next power of 2 above the predetermined spacing (for example, a 9 bit counter can be employed to detect ATM cell headers having a spacing of 424 bits). This has a particular advantage; when a binary adder or subtracter (which can conveniently be implemented in hardware using relatively few gates) is employed to determine a difference in spacing from two n-bit counter values, the result will automatically account for wraparound of the counter if only an n-bit result is employed.

In the case of ATM cell delineation, the detection will be used to match header values in a cell to the corresponding HEC byte. However, in some cases, different signature verification algorithms may be employed; a first check may be performed to detect a cell header and a second check may be performed to detect a data portion, and where both matches are detected at the expected spacing, the cell can be identified in this way.

The predetermined spacing is preferably equal to the cell length, 424 bits in the case of an ATM cell of 53 bytes.

The detecting means may be arranged to detect the predetermined spacing based on stored positional data, for example by scanning the memory contents, the detecting means thus operating after positional indicators have been stored in memory. Most preferably, however, the detecting means is arranged to receive the (current) output of the signature verification means (without substantial delay) and to detect the predetermined spacing based on a previously stored positional indicator and an indicator of the present position (or the position in the bitstream to which the output of the signature verification means relates). In this way, detection speed is enhanced, and the circuitry may in fact be simplified.

In the specific case of ATM cell identification, the sequence length is the header length of 40 bits. The signature function is a defined HEC algorithm, and is calculated from the first 32 bits of the sequence; this is then compared with the last 8 bits of the sequence.

The memory preferably consists of a FIFO memory for receiving positional indicators, preferably coupled to a cyclic counter which counts the bits of the bit stream. Each count at which a match is signalled is entered into the input end of the FIFO register, and is preferably deleted from its output end when the counter counts on beyond the stored count by more than the predetermined spacing.

The size of the FIFO register is preferably substantially less than the predetermined spacing. In the case of ATM, the chance of a random or false match in a single sequence is roughly 1 in 250. Over 424 bits (ie a cell length) of the bit sequence, there will therefore usually be a single false match, and quite often 2 false matches, with the chance of more false matches decreasing rapidly. Surprisingly, a FIFO length of less than 1/10th the number of bits in the spacing, even less than about 1/32 the number of bits is normally sufficient. A FIFO length of 10 is sufficient to reduce the chance of FIFO overflow and consequent failure to detect a cell start in 1 cell time to less than about 1 in 10⁶, and about 12 words is likely to be sufficient for all practical purposes. In the event of a fresh entry to the FIFO arriving when the FIFO is full, to prevent overflow either the oldest entry can be prematurely deleted or the entry of fresh values can be inhibited. In general, inhibition of the entry of fresh values is preferred, as this prevents entries being deleted from the FIFO before the predetermined spacing has been reached.

It can be seen that the product of the number of bits in the FIFO (for example 9) and the length of the FIFO (for example 10 words) may be less than the number of bits in the interval between signatures (this is, in general, a preferred feature). This can lead to a saving in substrate space required to implement the hardware as compared to conventional techniques.

If the detection of more than 2 coincidences is desired, then further FIFO registers can be provided, connected in series. Such further FIFO registers can be shorter than the first FIFO register, because most of the values stored in the first FIFO register will not result in coincidences and so will not be passed on to the second, and so on.

As an alternative to a FIFO, the memory for storing the matches may be a shift register whose length is the same as the cell length, with a bit being entered into the shift register each time there is a match. In such a case, the positional indicator is stored as the position of the bit in the shift register. Each time the monitoring means detects a match, its output is effectively ANDed with the output of the shift register. A 1 coming from the shift register indicates that there was a match exactly one cell length previously, and a coincidence of a current match and a stored match can therefore be taken as indicating that a true cell boundary has been detected.

Apparatus for identifying cell boundaries in an ATM bit stream will now be described, by way of example, with reference to the drawings, in which:
Fig. 1 is a diagram of the structure of an ATM bit stream;
Fig. 2 is a block diagram of a first embodiment of the apparatus;
Fig. 3 is a block diagram of a second embodiment of the apparatus.

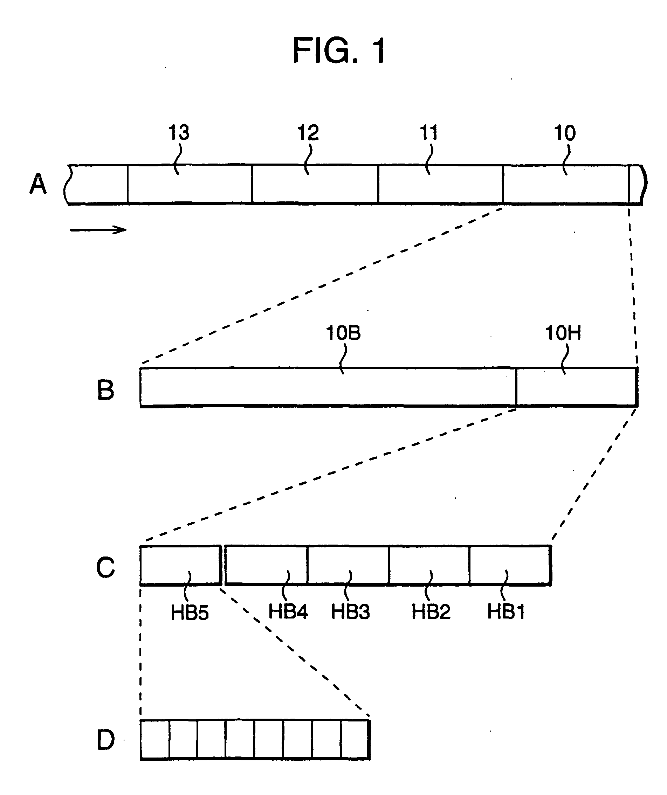

Fig. 1A shows a bit stream consisting of a series of ATM cells 10, 11, 12, etc. The arrow indicates the direction of the bit stream; cell 10 is the oldest (the first cell transmitted and received), cell 11 is the cell transmitted immediately after cell 11, and so on, with cell 13 being the youngest (most recently transmitted).

Fig. 1B shows the cell 10 expanded into a header 10H and a body 10B; Fig. 1C shows the header 10H expanded into 5 bytes HB1 to HB5; and Fig. 1D shows the byte HB5 expanded into 8 bits. The first four bytes HB1 to HB4 of the header contain routing and other information about the cell; the 5th byte HB5 is a check value, which is calculated from the first 4 bytes HB1 to HB4 of the header. This byte is known as the header error control (HEC). The body 10B is in fact 48 bytes long, so the total cell length is 53 bytes, ie 424 (53 x 8) bits.

The purpose of the present apparatus is to identify the points in the bit stream shown in Fig. 1A where the ATM cell boundaries lie. There are 424 possible positions for the cell boundaries, only one of which is correct.

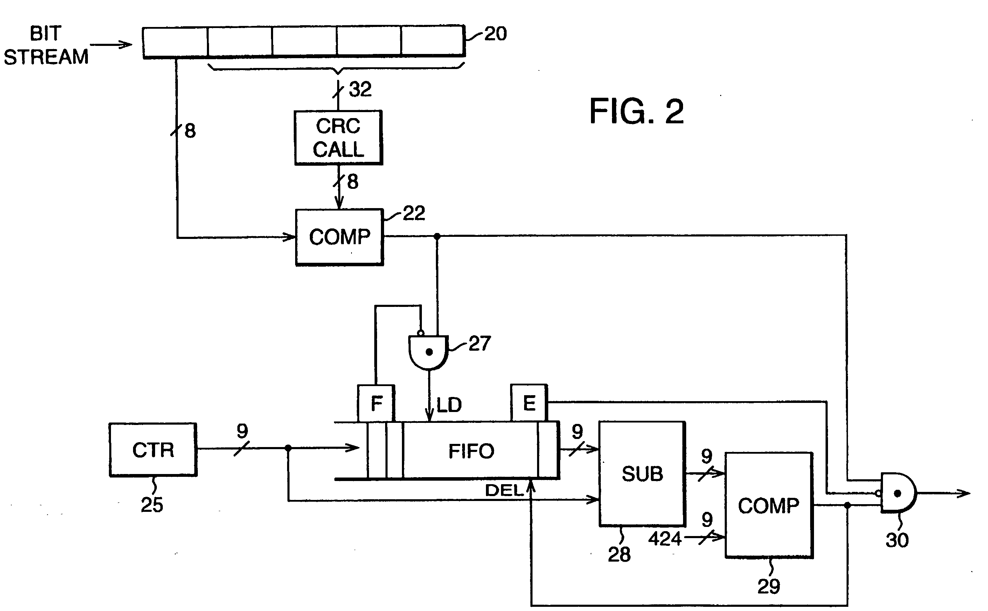

Referring to Fig. 2, in a first embodiment, the incoming bit stream is fed into a 40-bit shift register 20, which therefore holds in succession all 40-bit sequences in the bit stream. The first 4 bytes of this shift register feed a CRC calculation circuit 21, which feeds a comparator 22. The last byte of the shift register 20 (ie is the one which will contain the most recent 8 bits from the bit stream) also feeds the comparator 22. The comparator 22 thus detects a match between the CRC calculated from the first 4 bytes in the shift register and the contents of the 5th byte. A match indicates that the sequence in the shift register is a potential header.

The CRC calculation circuit 21 is preferably designed to operate with high parallelism, and we will assume that it generates its (8-bit) output virtually instantaneously. In practice, however, it may operate on a cascade or pipeline principle, with the output appearing after some delay, with several CRC calculations proceeding through their respective stages in the calculation circuit at the same time. In this case, a corresponding delay must be provided in the path from the 5th byte in the shift register 20 to the comparator 22.

There is a counter 25, which counts in synchronism with the bit rate of the bit stream entering the shift register 20. The counter 25 has 9 bits, so its cycle length is 512, which is the next power of 2 above the cell length of 424 bits. The output of this counter is provided as input data to a FIFO register 26. The output of the comparator 22 is fed to the load control input of the FIFO 26, so that each time the comparator 22 detects a match, ie a potential ATM header, the count of the counter 25 is loaded into the FIFO 26. (The comparator 22 feeds the FIFO 26 via a gate 27 which receives an inhibit signal from "full" control output F of the FIFO. Thus if the FIFO is full, any further counts from the counter 25 are lost until more room is created in the FIFO by some counts being deleted from it, as discussed below.)

A subtracter 28 is fed with the oldest count in the FIFO 26 and the current count from the counter 25, and produces the difference between those two values. The subtracter 28 feeds a comparator 29 which also has a fixed input of the value 424. This comparator therefore produces a true output when the difference from the subtracter 28 is 424. (More precisely, the comparator detects when the output of the subtractor is either 424 or 424-512, ie -88. It does this merely by ignoring the sign bit in the subtractor output.)

It is evident that the output of the comparator 29 reproduces the output of the comparator 22 with a delay of 424 bits, ie a delay of 1 ATM cell. The outputs of the two comparators 22 and 29 are fed to an AND gate 30 which detects any coincidence. Such a coincidence indicates that two potential ATM headers have been detected exactly 1 cell length apart, and this is taken as indicating that true cell headers have been detected.

The comparator 29 also feeds the delete control input of the FIFO 26. As soon as the output (oldest count) in the FIFO 26 becomes more than 424 bits old, it is deleted from the FIFO. Thus, data remains in the FIFO for no more than 1 cell length; this prevents spurious detection caused by previously stored values.

The FIFO 26 also has an "empty" control output E, which is fed as an inhibit signal to the coincidence gate 30. This prevents a coincidence being detected when the FIFO is empty. (This situation will in general only occur if there has been some error, for example due to a corrupted bit stream, or on initialisation of the apparatus, since matches from the comparator 22 should occur at least every 424 bits.)

The system as described so far detects doable matches. If it is desired to detect triple matches, a further FIFO can be provided, loaded with the output of the FIFO 26 when the gate 30 detects a coincidence, and feeding a further subtractor (also fed from the counter 25), comparator (fed with a fixed value of 336, ie 424 x 2 modulo 512), and coincidence gate (fed also from the comparator 22).

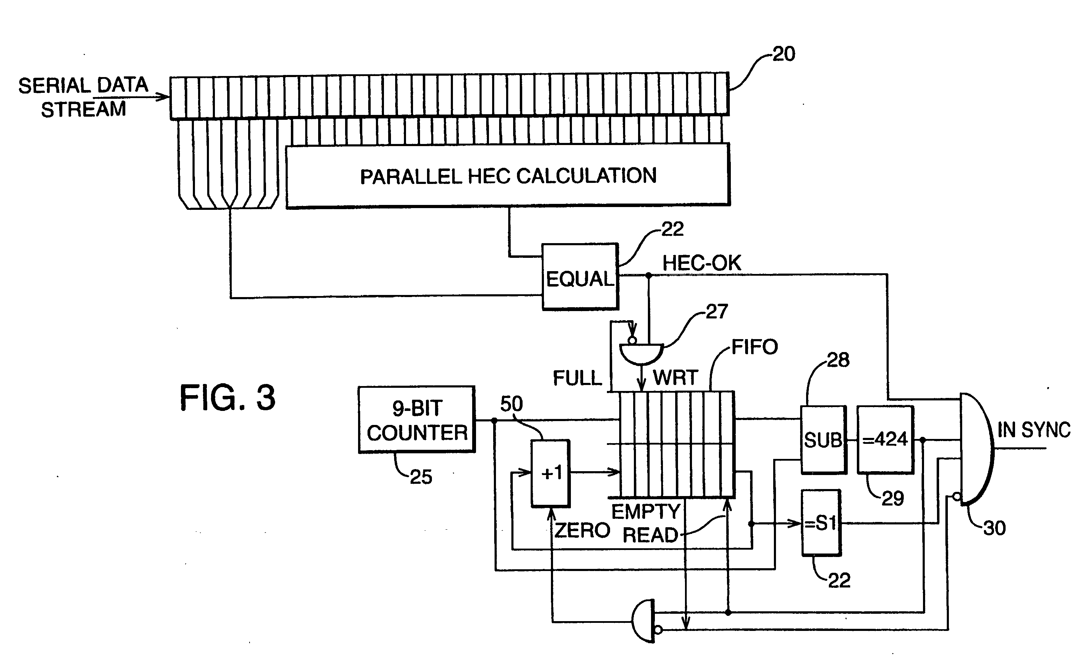

A second embodiment will now be described, with reference to Fig. 3. Similar functional elements to those of the first embodiment will not be described further. In this embodiment, the FIFO contains additional match counter bits, for counting the number of sequential matches at the predetermined spacing (in a simplification, a single flag bit may be used to detect three consecutive matches). The match counter bits (or single flag bit) associated with a first counter value are initially set to a predetermined value (for example 0) when a first match is first detected. However, if a subsequent match is detected at the predetermined spacing after the first match, the match counter bits are incremented by incrementer 50 and the new counter value and match counter bits stored in the FIFO. Then, if a match is detected at a predetermined spacing after a stored counter value, by detecting the value of the match counter bits in a further comparator 52, a desired number of matches can be identified. (If a single flag bit associated with the stored counter value for the previous match is set, it is possible to determine that a third sequential match has been detected directly from the flag bit). The technique can readily be extended by providing more counter bits, and incrementing the associated counter values on each detection of a match. Thus an 11 bit wide FIFO can provide 2 counter bits, enabling detection of up to 5 successive matches (the last match detected need not be stored, and it is to be remembered that a counter value of 0 corresponds to the first match). In such a case, the FIFO may need to be longer than a FIFO which only stores single matches. However, since the likelihood of 2 or more false matches is generally small, it will not normally be necessary to add more than a few extra words for each additional match to detect.

In summary, a preferred embodiment of the invention includes apparatus for identifying cell boundaries in an ATM bit stream of cells. The apparatus comprises cell boundary identification means for receiving the ATM bit stream and for identifying a bit sequence in the stream which signifies a cell boundary, a match signal being generated when a potential cell boundary is identified. Memory means are provided which respond to the match signals each time a cell boundary is identified. The memory means is synchronised with the bit rate of the data stream so as to store data which represents the position of the identified potential cell boundary in the bit stream, and it is also arranged to achieve synchronisation when a predetermined number of match signals have been detected with the same cell boundary spacing.

The memory means can store a respective bit stream count in response to each match signal and then compares the spacing between consecutive bit stream counts with a predetermined bit spacing between the cell boundaries, whereby synchronisation is achieved only when said spacings match. In this case, the memory means can include coincidence means responsive to coincidence of a current match signal with consecutive stored match signals to generate a synchronisation signal.

Alternatively, the memory means can include counter means for counting match signals with a similar predetermined bit spacing and for achieving synchronisation when a predetermined number of said similar match signals have been counted.

These preferred arrangements are particularly suitable for dealing with cells that each have a header which includes routing bytes and an HEC check byte, wherein the cell identification means identifies the cell boundary by calculating the value of the routing bytes, comparing the calculated value with the HEC check byte and then generating the match signal when the calculated value matches the HEC check byte.

A method is also disclosed of achieving synchronisation in a bit stream of cells with no defined synchronisation pattern, each cell having a header portion and a data portion. More particularly, the method includes the steps of identifying a bit sequence in the stream which signifies a cell boundary; generating a match signal each time a potential cell boundary is identified; storing data, which is synchronised with the bit rate of the data stream and which represents the positions of the potential cell boundaries; and establishing synchronisation when a predetermined number of match signals have been detected with the same cell boundary spacing.

## Claims

1. Apparatus for identifying predetermined bits defining cell boundaries, wherein the bits are positioned at a predetermined spacing in a serial data stream (20) of cells (10,11,12) with no defined synchronisation pattern, wherein each cell has a header portion (10H), a data portion (10B), each cell also having predetermined bits usable for identifying a cell boundary;
the apparatus comprising identification means (20, 22, 32) for receiving a bit sequence in the data stream (20) and for generating a match signal each time said predetermined bits are identified in the sequence; and
memory means (26, 28, 29, 30) for storing data in response to each of the match signals; and
**characterised by**:
counting means (25) for counting bits in the data sequence, the counting means including means for incrementing a counter value as the bit stream passes through the apparatus and further **characterised in that** the memory means (26) is arranged to store a counter value in the event of a match, the predetermined spacing being detected upon occurrence of two or more matches as a result of the comparison between a counter value stored at a previous match and a current counter value in the event of a subsequent match.

2. Apparatus according to Claim 1 further comprising synchronising means arranged to generate a coincidence signal in the event that two or more matches are detected at a predetermined spacing, whereby synchronisation is achieved when a predetermined number of the coincidence signals have been generated.

3. Apparatus according to Claim 1 or 2, wherein said memory (26) is a FIFO register.

4. Apparatus according to Claim 3, wherein the length of the FIFO register (26) is substantially less than the predetermined bit spacing between cell boundaries.

5. Apparatus according to Claim 4, wherein the length of the FIFO register (26) is between 1/10 and 1/32 of the predetermined bit spacing between cell boundaries.

6. Apparatus according to any of Claims 3 to 5, wherein the FIFO (26) is arranged to discard said counter value stored at a previous match when a difference between said current counter value and said counter value stored at a previous match exceeds the predetermined bit spacing between cell boundaries.

7. Apparatus according to any of Claims 3 to 6, wherein said memory means (26) includes FIFO registers connected in series for storing more than two coincidence signals.

8. Apparatus according to any preceding claim, wherein said memory means (26) includes a shift register whose length is the same as the predetermined bit spacing between cell boundaries, a bit being entered into the register on the occurrence of each coincidence signal, and AND logic responsive to coincidence of the match signal from the identification means (20,22,32) and the output of the shift register to detect the cell boundary.

9. Apparatus according to any preceding claim, including coincidence means (30) responsive to coincidence of a current match signal with one or more consecutive stored match signals to generate a synchronisation signal.

10. Apparatus according to any preceding claim, wherein each cell has a header which includes routing bytes and an HEC check byte, and wherein the cell identification means identifies the cell boundary by calculating the value of the routing bytes, comparing the calculated value with the HEC check byte and then generating the match signal when the calculated value matches the HEC check byte.

11. Apparatus according to any preceding claim, wherein the counting means (25) is a cyclic counter and wherein the cycle length of the counter is the same as the predetermined bit spacing between cell boundaries.

12. Apparatus according to any of Claims 3 to 7, arranged so that, in the event of the FIFO (26) becoming full, entry of fresh values into the FIFO is inhibited.

13. Apparatus according to any of Claims 3 to 12, wherein the FIFO length is about sixteen words or less, preferably about ten words or less.

14. Apparatus according to any preceding claim arranged to establish synchronisation with an ATM cell stream, wherein said predetermined bit spacing between cell boundaries equals an ATM cell length of 424 bits.

15. Apparatus according to any preceding claim, wherein two or more match signals are detected before achieving synchronisation, the memory means (26) also storing an identifier of positions at which a second or subsequent match has been detected.

16. A method of identifying predetermined bits defining cell boundaries, wherein the bits are positioned at a predetermined spacing in a serial data stream (20) of cells (10, 11, 12) with no defined synchronisation pattern, wherein each cell has a header portion (10H), a data portion (10B), each cell also having predetermined bits usable for identifying a cell boundary, the method including the steps of:
receiving a bit sequence in the data stream (20), identifying the predetermined bits usable for identifying the cell boundary and generating a match signal each time said predetermined bits are identified in the sequence;
storing data in response to each of the match signals; and
**characterised in that** the method further comprises:
counting bits in the data sequence using counting means including incrementing a counter value as the bit stream passes through the apparatus;
storing a counter value in the event of a match whereby the predetermined spacing is detected as a result of the occurrence of two or more matches by comparing a counter value stored at a previous match to a current counter value in the event of a subsequent match.

17. A method according to Claim 16 further comprising generating a coincidence signal in the event that two or more matches are detected at a predetermined spacing, and synchronising the serial data stream when a predetermined number of the coincidence signals have been generated.

## Patentansprüche

1. Vorrichtung zum Identifizieren vorgegebener Bits, die Zellengrenzen definieren, wobei die Bits in einem vorgegebenen Abstand in einem seriellen Datenstrom (20) von Zellen (10, 11, 12) ohne definiertes Synchronisationsmuster positioniert sind, wobei jede Zelle einen Kopfabschnitt (10H) und einen Datenabschnitt (10B) besitzt, wobei jede Zelle außerdem vorgegebene Bits besitzt, die für die Identifizierung einer Zellengrenze verwendet werden können;
wobei die Vorrichtung Identifizierungsmittel (20, 22, 32) umfasst, um eine Bitfolge in dem Datenstrom (20) zu empfangen und um ein Übereinstimmungssignal jedesmal zu erzeugen, wenn die vorgegebenen Bits in der Folge identifiziert werden; und
Speichermittel (26, 28, 29, 30) zum Speichern von Daten in Reaktion auf jedes der Übereinstimmungssignale; und
**gekennzeichnet durch**:
Zählmittel (25) zum Zählen von Bits in der Datenfolge, wobei die Zählmittel Mittel enthalten, um einen Zählerwert zu inkrementieren, wenn der Bitstrom **durch** die Vorrichtung läuft, und ferner **dadurch gekennzeichnet**, dass die Speichermittel (26) so beschaffen bzw. angeordnet sind, dass sie einen Zählerwert im Fall einer Übereinstimmung speichern,
wobei der vorgegebene Abstand bei Auftreten von zwei oder mehr Übereinstimmungen als Ergebnis des Vergleichs zwischen einem bei einer vorhergehenden Übereinstimmung gespeicherten Zählerwert und einem aktuellen Zählerwert im Fall einer nachfolgenden Übereinstimmung erfasst wird.

2. Vorrichtung nach Anspruch 1, die ferner Synchronisationsmittel umfasst, die so beschaffen sind, dass sie ein Koinzidenzsignal in dem Fall erzeugen, in dem zwei oder mehr Übereinstimmungen mit einem vorgegebenen Abstand erfasst werden, wobei die Synchronisation ausgeführt wird, wenn eine vorgegebene Anzahl von Koinzindenzsignalen erzeugt worden ist.

3. Vorrichtung nach Anspruch 1 oder 2, bei der der Speicher (26) ein FIFO-Register ist.

4. Vorrichtung nach Anspruch 3, bei der die Länge des FIFO-Registers (26) wesentlich kleiner als der vorgegebene Bitabstand zwischen Zellengrenzen ist.

5. Vorrichtung nach Anspruch 4, bei der die Länge des FIFO-Registers (26) zwischen 1/10 und 1/32 des vorgegebenen Bitabstands zwischen Zellengrenzen ist.

6. Vorrichtung nach einem der Ansprüche 3 bis 5, bei der das FIFO (26) so beschaffen ist, dass es den Zählerwert, der bei einer früheren Übereinstimmung gespeichert wurde, verwirft, wenn eine Differenz zwischen dem aktuellen Zählerwert und dem bei einer früheren Übereinstimmung gespeicherten Zählerwert den vorgegebenen Bitabstand zwischen Zellengrenzen übersteigt.

7. Vorrichtung nach einem der Ansprüche 3 bis 6, bei der die Speichermittel (26) in Serie geschaltete FIFO-Register, um mehr als zwei Koinzidenzsignale zu speichern.

8. Vorrichtung nach einem vorhergehenden Anspruch, bei der die Speichermittel (26) ein Schieberegister, dessen Länge gleich dem vorgegebenen Bitabstand zwischen Zellengrenzen ist, wobei bei Auftreten jedes Koinzidenzsignals ein Bit in das Register eingegeben wird, sowie eine UND-Logik, die auf die Koinzidenz des Übereinstimmungssignals von den Identifizierungsmitteln (20, 22, 32) mit dem Ausgang des Schieberegisters anspricht, um die Zellengrenze zu erfassen, enthält.

9. Vorrichtung nach einem vorhergehenden Anspruch, die Koinzidenzmittel (30) enthält, die in Reaktion auf die Koinzidenz eines aktuellen Übereinstimmungssignals mit einem oder mehreren nacheinander gespeicherten Übereinstimmungssignalen ein Synchronisationssignal erzeugen.

10. Vorrichtung nach einem vorhergehenden Anspruch, bei der jede Zelle einen Kopf besitzt, der Lenkungsbytes und ein HEC-Prüfbyte enthält, und bei der die Zellenidentifizierungsmittel die Zellengrenze dadurch identifizieren, dass sie den Wert der Lenkungsbytes berechnen, den berechneten Wert mit dem HEC-Prüfbyte vergleichen und dann das Übereinstimmungssignal erzeugen, wenn der berechnete Wert mit dem HEC-Prüfbyte übereinstimmt.

11. Vorrichtung nach einem vorhergehenden Anspruch, bei der die Zählmittel (25) ein zyklischer Zähler sind und bei der die Zykluslänge des Zählers gleich dem vorgegebenen Bitabstand zwischen Zellengrenzen ist.

12. Vorrichtung nach einem der Ansprüche 3 bis 7, die so beschaffen ist, dass in dem Fall, dass das FIFO (26) voll wird, die Eingabe frischer Werte in das FIFO verhindert wird.

13. Vorrichtung nach einem der Ansprüche 3 bis 12, bei der die FIFO-Länge etwa sechzehn Wörter oder weniger und vorzugsweise etwa zehn Wörter oder weniger beträgt.

14. Vorrichtung nach einem vorhergehenden Anspruch, die so beschaffen ist, dass sie eine Synchronisation mit einem ATM-Zellenstrom herstellt, wobei der vorgegebene Bitabstand zwischen Zellengrenzen gleich einer ATM-Zellenlänge von 424 Bits ist.

15. Vorrichtung nach einem vorhergehenden Anspruch, bei der zwei oder mehr Übereinstimmungssignale erfasst werden, bevor eine Synchronisation erzielt wird, wobei die Speichermittel (26) außerdem einen Identifizierer von Positionen, an denen eine zweite oder spätere Übereinstimmung erfasst worden ist, speichern.

16. Verfahren zum Identifizieren vorgegebener Bits, die Zellengrenzen definieren, wobei die Bits in einem vorgegebenen Abstand in einem seriellen Datenstrom (20) von Zellen (10, 11, 12) ohne definiertes Synchronisationsmuster positioniert sind, wobei jede Zelle einen Kopfabschnitt (10H) und einen Datenabschnitt (10B) besitzt, wobei jede Zelle außerdem vorgegebene Bits besitzt, die für die Identifizierung einer Zellengrenze verwendet werden können, wobei das Verfahren die folgenden Schritte umfasst:
Empfangen einer Bitfolge in dem Datenstrom (20), Identifizieren der vorgegebenen Bits, die zum Identifizieren der Zellengrenze verwendet werden können, und Erzeugen eines Übereinstimmungssignals jedesmal, wenn die vorgegebenen Bits in der Folge identifiziert werden;
Speichern von Daten in Reaktion auf jedes der Übereinstimmungssignale; und
**dadurch gekennzeichnet, dass** das Verfahren ferner umfasst:
Zählen von Bits in der Datenfolge unter Verwendung von Zählmitteln, umfassend das Inkrementieren eines Zählerwertes, wenn der Bitstrom durch die Vorrichtung läuft;
Speichern eines Zählerwertes im Fall einer Übereinstimmung, wobei der vorgegebene Abstand als Ergebnis des Auftretens von zwei oder mehr Übereinstimmungen erfasst wird, indem ein Zählerwert, der bei einer früheren Übereinstimmung gespeichert wurde, mit einem aktuellen Zählerwert im Fall einer nachfolgenden Übereinstimmung verglichen wird.

17. Verfahren nach Anspruch 16, das ferner das Erzeugen eines Koinzidenzsignals in dem Fall, in dem zwei oder mehr Übereinstimmungen mit einem vorgegebenen Abstand erfasst werden, und das Synchronisieren des seriellen Datenstroms, wenn eine vorgegebene Anzahl von Koinzidenzsignalen erzeugt worden ist, umfasst.

## Revendications

1. Appareil pour identifier des bits prédéterminés définissant des limites de cellules, dans lequel les bits sont positionnés à un intervalle prédéterminé dans un train de données de série (20) de cellules (10, 11, 12) sans modèle de synchronisation défini, dans lequel chaque cellule comprend une partie de début (10H), une partie de données (10B), chaque cellule ayant également des bits prédéterminés utilisables pour identifier une limite de cellule ;
l'appareil comprenant des moyens d'identification (20, 22, 32) pour recevoir une séquence de bits dans le train de données (20) et pour générer un signal de couplage chaque fois que lesdits bits prédéterminés sont identifiés dans la séquence ; et
des moyens de mémoire (26, 28, 29, 30) pour enregistrer les données en réponse à chacun des signaux de couplage ; et
**caractérisé par** :
des moyens de comptage (25) pour compter les bits dans la séquence de données, les moyens de comptage comprenant des moyens d'incrémentation d'une valeur de compteur quand le flot de bits traverse l'appareil, et **caractérisé** également en ce que le moyen de mémoire (26) est disposé pour enregistrer une valeur de compteur en cas de couplage, l'intervalle prédéterminé étant détecté à l'occurrence de deux couplages ou plus à la suite de la comparaison entre une valeur de compteur enregistrée lors d'un couplage précédent et une valeur de compteur actuelle en cas d'un couplage successif.

2. Appareil selon la revendication 1 comprenant également des moyens de synchronisation disposés pour générer un signal de coïncidence au cas où deux couplages ou plus sont détectés à un intervalle prédéterminé, moyennant quoi la synchronisation est obtenue quand un nombre prédéterminé de signaux de coïncidence a été généré.

3. Appareil selon la revendication 1 ou 2, dans lequel ladite mémoire (26) est un registre Premier Entré, Premier Sorti.

4. Appareil selon la revendication 3, dans lequel la longueur du registre Premier Entre, Premier Sorti (26) est sensiblement inférieure à l'intervalle de bits prédéterminé entre les limites de cellules.

5. Appareil selon la revendication 4, dans lequel la longueur du registre Premier Entré, Premier Sorti (26) est comprise entre 1/10 et 1/32 de l'intervalle de bits prédéterminé entre les limites de cellules.

6. Appareil selon l'une quelconque des revendications 3 à 5, dans lequel le registre Premier Entré, Premier Sorti (26) est disposé pour rejeter ladite valeur de compteur enregistrée lors d'un couplage précédent quand une différence entre ladite valeur de compteur actuelle et ladite valeur de compteur enregistrée lors d'un couplage précédent dépasse l'intervalle de bits prédéterminé entre les limites de cellules.

7. Appareil selon l'une quelconque des revendications 3 à 6, dans lequel ledit moyen de mémoire (26) comprend des registres Premier Entré, Premier Sorti reliés en série pour enregistrer plus de deux signaux de coïncidence.

8. Appareil selon l'une quelconque des revendications qui précèdent, dans lequel ledit moyen de mémoire (26) comprend un registre à décalage dont la longueur est identique à l'intervalle de bits prédéterminé entre les limites de cellules, un bit étant saisi dans le registre à l'occurrence de chaque signal de coïncidence, et la logique AND réagit à la coïncidence du signal de couplage du moyen d'identification (20, 22, 32) et la sortie du registre à décalage pour détecter la limite de la cellule.

9. Appareil selon l'une quelconque des revendications qui précèdent, comprenant des moyens de coïncidence (30) qui réagit à la coïncidence d'un signal de couplage courant avec un ou plusieurs signaux de couplage enregistrés consécutivement pour générer un signal de synchronisation.

10. Appareil selon l'une quelconque des revendications qui précèdent, dans lequel chaque cellule a un début qui comprend des bits de routage et un bit de contrôle HEC, et dans lequel le moyen d'identification de la cellule identifie la limite de la cellule en calculant la valeur des bits de routage, en comparant la valeur calculée avec le bit de contrôle HEC et en générant ensuite le signal de couplage quand la valeur calculée correspond au bit de contrôle HEC.

11. Appareil selon l'une quelconque des revendications qui précèdent, dans lequel le moyen de comptage (25) est un compteur cyclique et dans lequel la longueur de cycle du compteur est la même que l'intervalle de bits prédéterminé entre les limites des cellules.

12. Appareil selon l'une quelconque des revendications 3 à 7, disposé de telle sorte que, dans le cas où le registre Premier Entré, Premier Sorti (26) est plein, la saisie de nouvelles valeurs dans le registre Premier Entré, Premier Sorti soit interdite.

13. Appareil selon l'une quelconque des revendications 3 à 12, dans laquelle la longueur du registre Premier Entré, Premier Sorti est d'environ seize mots ou moins, de préférence environ dix mots ou moins.

14. Appareil selon l'une quelconque des revendications qui précèdent disposé pour établir une synchronisation avec un train de cellules ATM, dans lequel ledit intervalle de bits prédéterminé entre les limites des cellules est égal à une longueur de cellules ATM de 424 bits.

15. Appareil selon l'une quelconque des revendications qui précèdent, dans lequel deux ou plusieurs signaux de couplage sont détectés avant d'obtenir la synchronisation, le moyen de mémoire (26) stockant également un identifiant de positions auxquelles un second couplage ou un suivant ont été détectés.

16. Procédé d'identification de bits prédéterminés définissant des limites de cellules, dans lequel les bits sont positionnés à un intervalle prédéterminé dans un train de données de série (20) de cellules (10, 11, 12) sans modèle de synchronisation défini, dans lequel chaque cellule comprend une partie de début (10H), une partie de données (10B), chaque cellule ayant également des bits prédéterminés utilisables pour identifier une limite de cellule, le procédé comprenant les étapes de :
réception d'une séquence de bits dans le train de données (20), identification des bits prédéterminés utilisables pour identifier la limite de la cellule et générer un signal de couplage chaque fois que lesdits bits prédéterminés sont identifiés dans la séquence ;
enregistrement des données en réponse à chacun des signaux de couplage ; et
**caractérisé en ce que** le procédé comprend également :
le comptage des bits dans la séquence de données utilisant des moyens de comptage comprenant l'incrémentation d'une valeur de compteur quand le flot de données traverse l'appareil ;
l'enregistrement d'une valeur de compteur en cas de couplage, moyennant quoi l'intervalle prédéterminé est détecté à la suite de l'occurrence de deux ou de plusieurs couplages en comparant une valeur de compteur enregistrée lors d'un couplage précédent à une valeur de compteur courante en cas de couplage successif.

17. Procédé selon la revendication 16 qui comprend également la génération d'un signal de coïncidence au cas où deux ou plusieurs couplages sont détectés à un intervalle prédéterminé, et la synchronisation du flot de données de série quand un nombre prédéterminé de signaux de coïncidence a été généré.
